# EUROPEAN PATENT APPLICATION

(11) **EP 4 749 130 A1**
(43) Date of publication of application: **27.05.2026**
(21) Application number: 23946591.7
(22) Date of filing: 21.07.2023
(51) Int. Cl.: F04C 29/00, F04B 39/00

(54) **COMPRESSOR AND REFRIGERATION CYCLE DEVICE**

(71) Applicant: Hitachi-Johnson Controls Air Conditioning, Inc., Tokyo 105-0022 (JP)
(72) Inventor: MURAKAMI, Akihiro, Tokyo 105-0022 (JP)
(74) Representative: MERH-IP Matias Erny Reichl Hoffmann Patentanwälte PartG mbB
(86) International application number: PCT/JP2023/026880
(87) International publication number: WO 2025/022504

(57) **Abstract**

Provided is a compressor having improved slidability in a sliding portion. In order to solve the problem, a compressor 100 includes a high-pressure chamber type hermetic container 1 in which refrigerant containing hydrofluoroolefin refrigerant of 50 mass% or more and refrigerator oil are sealed, and a compression mechanism 8 housed in the hermetic container 1 and having a sliding portion 9 made of an iron-based material, the refrigerator oil includes at least one refrigerator oil of polyvinyl ether or polyol ester, and the kinematic viscosity of the refrigerator oil at 40°C is 10 mm²/s or more and 40 mm²/s or less.

## Description

### TECHNICAL FIELD

The present disclosure relates to a compressor and a refrigeration cycle device.

### BACKGROUND ART

R410A refrigerant, which is mainstream in refrigeration cycle devices such as refrigerators, freezers, and commercial air conditioners, has a high global warming potential (GWP) of 2090, and has been changed to refrigerant having a low GWP value for the purpose of suppressing global warming. For example, R454C refrigerant as a next-generation low-GWP refrigerant candidate is a refrigerant mixture containing R1234yf of 78.5 mass% and R32 of 21.5 mass%.

The abstract of Patent Literature 1 describes "a composition containing refrigerant and refrigerator oil, in which the refrigerant includes at least one selected from a group consisting of HFO-1141, HFO-1132(E/Z), HFO-1132a, HFO-1123, and HFO-1114 and the refrigerator oil has a contact angle of 0.1 ° ≤ T ≤ 90° with a base material including at least one selected from a group consisting of engineering plastic, an organic film, an inorganic film, glass, and a metal section".

### CITATION LIST

### PATENT LITERATURE

PATENT LITERATURE 1: JP-A-2022-132670

### SUMMARY OF INVENTION

### PROBLEMS TO BE SOLVED BY INVENTION

When hydrofluoroolefin refrigerant (hereinafter, referred to as HFO refrigerant) and hydrofluorocarbon refrigerant (hereinafter, referred to as HFC refrigerant) are used in combination, performance such as a refrigeration capacity may be lower than that when the HFO refrigerant and the HFC refrigerant are not used in combination depending on a use ratio between the HFO refrigerant and the HFC refrigerant. For example, when trial calculation is made with the R454C refrigerant, a theoretical refrigeration capacity decreases by about 35% as compared with the R410A refrigerant under the rated temperature H condition in Table 1 of JIS-B8600 "Rated Temperature Condition for Refrigerant Compressor". In order to secure the refrigeration capacity, in a case of a compressor driven by an inverter, the number of rotations in operation (rotation speed) can be increased. However, the PV value of a bearing increases by the increment of the rotation speed. Thus, it is preferable to have high slidability.

In the invention described in Patent Literature 1, disproportionation of refrigerant has been studied (paragraph 0059 and the like). However, studies have not been conducted to improve slidability in a sliding portion (bearing or the like) of a compressor. An object of the present disclosure is to provide a compressor and a refrigeration cycle device having improved slidability in a sliding portion.

### SOLUTION TO PROBLEMS

The compressor of the present disclosure includes a high-pressure chamber type hermetic container in which refrigerant containing hydrofluoroolefin refrigerant of 50 mass% or more and refrigerator oil are sealed, and a compression mechanism housed in the hermetic container and having a sliding portion made of an iron-based material, the refrigerator oil includes at least one refrigerator oil of polyvinyl ether or polyol ester, and the kinematic viscosity of the refrigerator oil at 40°C is 10 mm²/s or more and 40 mm²/s or less. Other solutions will be described later in Description of Embodiments.

### EFFECTS OF INVENTION

According to the present disclosure, the compressor and the refrigeration cycle device having improved slidability in the sliding portion can be provided.

### BRIEF DESCRIPTION OF INVENTION

Fig. 1 is a sectional view illustrating a compressor of the present disclosure.
Fig. 2 is a sectional view illustrating the vicinity of a sliding portion.
Fig. 3 is a graph showing a relationship of the type of refrigerant and the kinematic viscosity of refrigerator oil with a PV value.
Fig. 4 is a system diagram illustrating a refrigeration cycle device of the present disclosure.

### DESCRIPTION OF EMBODIMENTS

Hereinafter, modes (referred to as embodiments) for carrying out the present disclosure will be described with reference to the drawings. In the following description of one embodiment, another embodiment applicable to one embodiment will also be described as appropriate. The present disclosure is not limited to the following one embodiment, and different embodiments may be combined or modifications may be arbitrarily made without significantly impairing the effects of the present disclosure. In addition, the same members are denoted by the same reference numerals, and redundant description thereof will be omitted. Furthermore, those having the same functions are denoted by the same names. The illustrated contents are merely schematic, and for convenience of illustration, an actual configuration may be changed without significantly impairing the effects of the present disclosure, or illustration of some members may be omitted or modified between the drawings. In addition, all the configurations are not necessarily provided in the same embodiment.

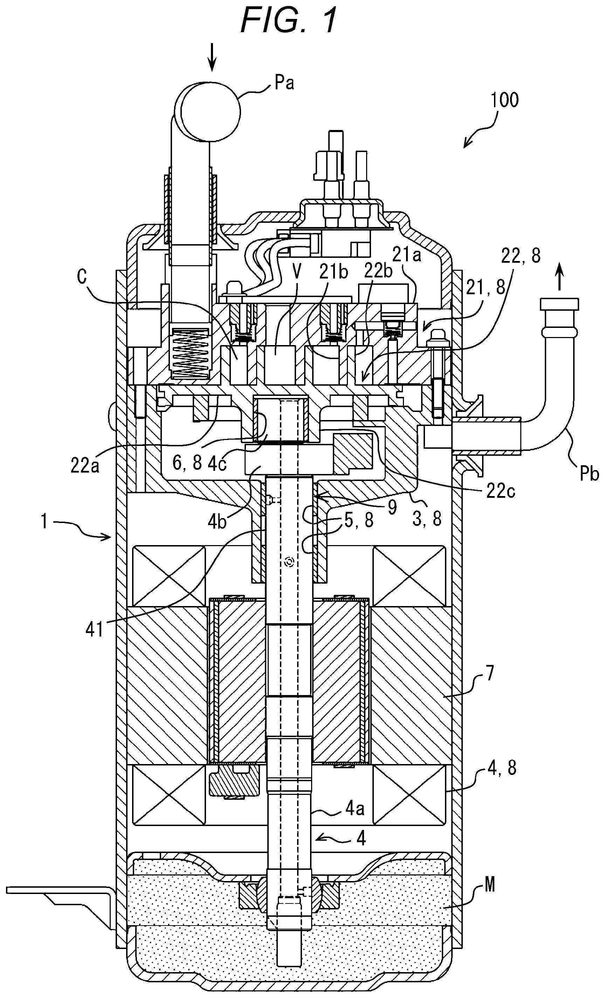

Fig. 1 is a sectional view illustrating a compressor of the present disclosure. A compressor 100 is a device that compresses gaseous refrigerant, and is, for example, a scroll compressor. The compressor 100 includes a hermetic container 1 and a compression mechanism 8 housed in the hermetic container 1. The compression mechanism 8 includes a frame 3, a crankshaft 4 (drive shaft), a main bearing 5, and a turning bearing 6. Among these components, a sliding portion 9 is formed at a contact portion between the crankshaft 4 and the main bearing 5. Thus, the compression mechanism 8 has the sliding portion 9. Note that the sliding portion 9 is not limited to one between the crankshaft 4 and the main bearing 5, and may be any portion as long as the sliding portion 9 slides in the compressor 100.

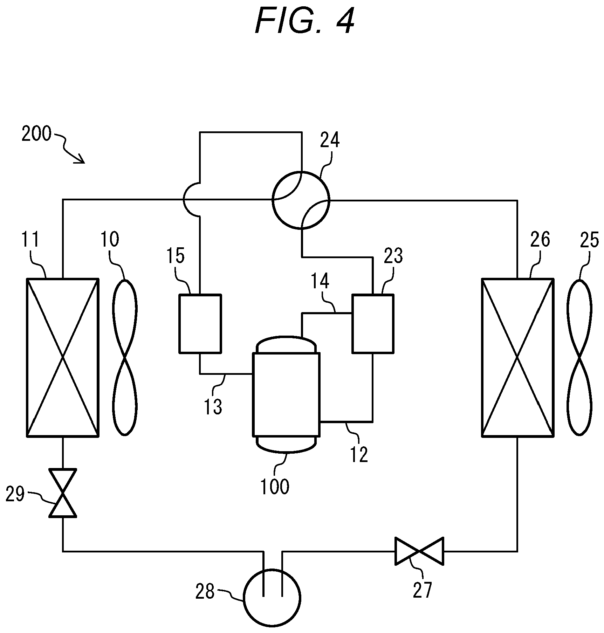

The hermetic container 1 is of a high-pressure chamber type. In addition to the compression mechanism 8, an electric motor 7 and the like are housed in the hermetic container 1. Refrigerant containing hydrofluoroolefin refrigerant (HFO refrigerant) of 50 mass% or more and refrigerator oil are sealed in the hermetic container 1. The refrigerator oil is also present as an oil reservoir M in a lower portion in the hermetic container 1. The hermetic container 1 includes a suction pipe Pa for sucking refrigerant, and a discharge pipe Pb for discharging refrigerant compressed by compression mechanism 8. The suction pipe Pa is connected to a suction circuit 13 (Fig. 4) to be described later. The discharge pipe Pb is connected to a discharge circuit 14 (Fig. 4) to be described later.

The compression mechanism 8 is a mechanism that compresses refrigerant as the crankshaft 4 rotates. The compression mechanism 8 includes a fixed scroll 21 and a turning scroll 22. The fixed scroll 21 is a member fixed in the hermetic container 1. The fixed scroll 21 includes a thick baseplate 21a having a disk shape, and a spiral wrap 21b standing on the lower side of the baseplate 21a. The turning scroll 22 is a moving member forming a compression chamber C with the fixed scroll 21 by turning. The turning scroll 22 includes a disk-shaped baseplate 22a, a spiral wrap 22b standing on the baseplate 22a, and a boss 22c fitted in an upper end portion of the crankshaft 4. The turning scroll 22 is supported by the frame 3.

The compression chamber C is formed between the wrap 21b and the wrap 22b. The compression chamber C is a space for compressing gaseous refrigerant, and is formed on each of the outer line side and inner line side of the wrap 22b. In the vicinity of the center of the baseplate 21a, a discharge port V for guiding refrigerant compressed in the compression chamber C to an upper space in the hermetic container 1 is provided.

The crankshaft 4 extends in an up-down direction, and is made of, for example, an iron-based material (carbon steel, chromium molybdenum steel, or the like). The crankshaft 4 includes a main shaft 4a, a flange 4b connected to the upper side of the main shaft 4a, and an eccentric portion 4c connected to the upper side of the flange 4b. The main bearing 5 rotatably supports an upper portion of the crankshaft 4. The main bearing 5 is fixed to the frame 3. The main bearing 5 is, for example, a thrust bearing, and rotatably contacts a surface 41 of the crankshaft 4. The turning bearing 6 rotatably supports the eccentric portion 4c.

The sliding portion 9 is formed between the main bearing 5 and the crankshaft 4 as described above. The sliding portion 9 is made of an iron-based material, and in the example of the present disclosure, the crankshaft 4 having the surface 41 and the main bearing 5 are made of an iron-based material. The iron-based material described herein is, for example, carbon steel or chromium molybdenum steel. Since these materials have high hardness, the use of these materials makes it possible to obtain the compressor 100 having excellent wear resistance and high reliability.

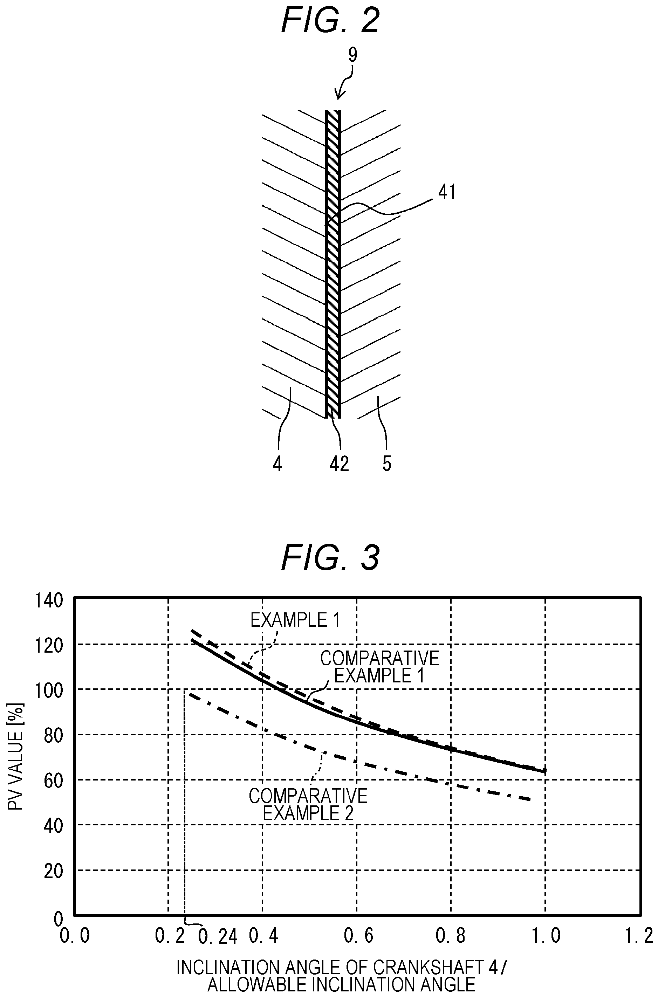

Fig. 2 is a sectional view illustrating the vicinity of the sliding portion 9. A film 42 (physical adsorption film and chemical adsorption film described later) containing fluorine derived from the HFO refrigerant is formed on the surface 41 of the crankshaft 4 (an example of a member) made of the iron-based material in the sliding portion 9. The film 42 is usually formed by rotation of the crankshaft 4 with the use of the compressor 100 (Fig. 1), but may be formed before the use of the compressor 100 (for example, at the time of shipping from a factory).

The refrigerant sealed in the hermetic container 1 (Fig. 1) contains the HFO refrigerant of 50 mass% or more as described above. The HFO refrigerant is unsaturated refrigerant containing a double bond (unsaturated bond) in a molecule. The double bond exhibits strong adsorption to the surface 41 made of the iron-based material in the sliding state of the crankshaft 4. Thus, the HFO refrigerant forms the physical adsorption film (film 42) formed of the refrigerant on the surface 41. As a result, since the physical adsorption film exhibits high slidability, the slidability of the crankshaft 4 is improved.

At least part of the formed physical adsorption film is decomposed by frictional heat generated by sliding. As a result, the decomposed physical adsorption film changes into the chemical adsorption film (film 42) made of a fluorine compound. The chemical adsorption film exhibits higher slidability than that of the physical adsorption film for the sliding of the crankshaft 4. As a result, the slidability of the crankshaft 4 in the sliding portion 9 can be further improved, and the seizure resistance and reliability of the compressor 100 can be improved.

Fig. 3 is a graph showing a relationship of the type of refrigerant and the kinematic viscosity of the refrigerator oil with a PV value. The graph of Fig. 3 is a relative graph in which the bearing PV value when the horizontal axis is 0.24 is 100%. The horizontal axis indicates the actual inclination angle of the crankshaft 4 with respect to the allowable inclination angle of the crankshaft 4. It can be said that the closer the numerical value on the horizontal axis is to 1, the greater the inclination of the crankshaft 4 is. Thus, it can be said that the larger the numerical value on the horizontal axis is, the more severe the condition of the sliding portion 9 is. The vertical axis indicates the PV value (PV value limit) of the main bearing 5 (Fig. 2). The PV value is the product of a surface pressure (p) and a surface velocity (v), and correlates with the frictional heat. It can be said that the larger the PV value is, the higher the slidability is and the better the durability is. Thus, the smaller the actual inclination angle of the crankshaft 4 with respect to the allowable inclination angle of the crankshaft 4 is, the higher the PV value is.

A graph (Example 1) indicated by a solid line shows a result of using R454C as the refrigerant and polyvinyl ether (kinematic viscosity at 40°C: 32 mm²/s) as the refrigerator oil. R454C is refrigerant containing R1234yf (HFO refrigerant) of 78.5 mass% and R32 (HFC refrigerant) of 21.5 mass%. A graph (Comparative Example 1) indicated by a broken line shows a result of using R410A as the refrigerant and polyvinyl ether (kinematic viscosity at 40°C: 68 mm²/s) as the refrigerator oil. R410A is refrigerant containing R125 (HFO refrigerant) of 50 mass% and R32 (HFC refrigerant) of 50 mass%.

A graph (Comparative Example 2) indicated by a dash-dotted line shows a result of using R448A as the refrigerant and polyvinyl ether (kinematic viscosity at 40°C: 32 mm²/s) as the refrigerator oil. R448A is refrigerant containing R1234yf (HFO refrigerant) of 20 mass%, R1234ze (HFO refrigerant) of 7 mass%, R32 (HFO refrigerant) of 26 mass%, R125 (HFC refrigerant) of 26 mass%, and R134a (HFO refrigerant) of 21 mass%. Thus, R448A contains the HFO refrigerant of 27 mass% and the HFC refrigerant of 73 mass%.

The above points are summarized in Table 1 below.

**[Table 1]**

| | **Ratio of HFO Refrigerant** | **Ratio of HFC Refrigerant** | **Kinetic Viscosity of Refrigerator Oil at 40°C** |
|---|---|---|---|
| **Example 1 (Solid Line)** | **78.5 mass%** | **21.5 mass%** | **32 mm²/s** |
| **Comparative Example 1 (Broken line)** | **50 mass%** | **50 mass%** | **68 mm²/s** |
| **Comparative Example 2 (Dash-Dotted Line)** | **27 mass%** | **73 mass%** | **32 mm²/s** |

Normally, the higher the kinematic viscosity of the refrigerator oil, the higher the slidability. Thus, Comparative Example 1 having a relatively high kinematic viscosity shows a large PV value, and therefore, it can be said that Comparative Example 1 has high slidability (durability). However, the graph of Example 1 is at the substantially same position as that of the graph of Comparative Example 1. Thus, it was found that Example 1 having a relatively low kinematic viscosity also has high slidability (durability). This decrease is considered to be due to the mechanism described above with reference to Fig. 2. That is, since the kinematic viscosity of Example 1 is lower than the kinematic viscosity of Comparative Example 1, the slidability is considered to be low if the refrigerant is not considered, but it is considered that the refrigerant of Example 1 acted to compensate for the low slidability. In other words, even if the kinematic viscosity of the refrigerator oil is low, the slidability can be improved using the HFO refrigerant having a predetermined ratio or more.

From another point of view, the kinematic viscosity of the refrigerator oil is the same between Example 1 and Comparative Example 2. Thus, considering only the action caused by the refrigerator oil, the position of the graph related to the PV value is considered to be the substantially same. However, the ratio of the HFO refrigerant in the refrigerant used is completely different. Due to such a difference in the ratio, the PV value of Example 1 increased by about 20% as a whole as compared with the PV value of Comparative Example 2. Thus, it was found that the slidability can be improved using the HFO refrigerant in the scope of the present disclosure (including the HFO refrigerant of 50 mass% or more) instead of simply using the HFO refrigerant in an arbitrary amount.

The refrigerator oil sealed in the hermetic container 1 (Fig. 1) has a kinematic viscosity of 10 mm²/s or more and 40 mm²/s or less at 40°C. Accordingly, even when the refrigerator oil having a relatively low kinematic viscosity is used, high slidability can be obtained. In particular, with 40 mm²/s or less, the viscous resistance, frictional resistance, and the like of the refrigerator oil can be suppressed low, and the efficiency of the compressor 100 can be improved.

The refrigerator oil includes at least one refrigerator oil of polyvinyl ether or polyol ester. In particular, polyvinyl ether has high durability against air and water. Thus, polyvinyl ether can be suitably used, for example, in a refrigeration cycle device 200 (Fig. 4) having a long pipe length. On the other hand, polyol ester has lower durability against air and water than that of polyvinyl ether. Thus, polyol ester can be suitably used in the refrigeration cycle device 200 (Fig. 4) having a relatively short pipe length.

The refrigerant sealed in the hermetic container 1 (Fig. 1) contains the HFO refrigerant of 50 mass% or more (at least 50 mass%) as described above. The content of the HFO refrigerant is preferably 70 mass% or more and 100 mass% or less, and more preferably 90 mass% or more and 100 mass% or less with respect to the entire sealed refrigerant. As the refrigerant, the HFO refrigerant and the HFC refrigerant are preferably used in combination. The functions (for example, slidability, refrigeration capacity, and the like) of both the HFO refrigerant and the HFC refrigerant can be exhibited by the combination use.

The HFO refrigerant includes, for example, at least one of R1234yf or R1234ze. These refrigerants have a high refrigeration capacity while having a low global warming potential (GWP). Thus, with at least one of these refrigerants, it is possible to obtain the compressor 100 having a small load on global environment and high performance.

At this time, the refrigerant preferably contains R32 as at least part of the refrigerant other than the HFO refrigerant. R32 is widely used, and has high refrigeration performance and a low GWP among the HFC refrigerants. Thus, it is possible to obtain the compressor 100 having a small load on the global environment and high performance.

In another embodiment, the HFO refrigerant includes first refrigerant which is at least one of R1234yf or R1234ze, and second refrigerant which is at least one of R1132(E) or R1123. In the entire sealed HFO refrigerant, the first refrigerant is contained at a ratio of 50 mass% or more, and the second refrigerant is contained at a ratio of less than 50 mass%. With this configuration, the ratio of the first refrigerant which is at least one of R1234yf or R1234ze among the HFO refrigerants to be used can be improved, and the function (stability, refrigerant capacity, efficiency, and the like) thereof can be enhanced.

In a case where the second refrigerant contains R1132(E), the first refrigerant is preferably 65 mass% or more and 100 mass% or less, more preferably 70 mass% or more and 85 mass% or less, and particularly preferably 70 mass% or more and 80 mass% or less with respect to the entire HFO refrigerant. In a case where the second refrigerant contains R1123, the first refrigerant is preferably 50 mass% or more and 100 mass% or less, more preferably 55 mass% or more and 80 mass% or less, and particularly preferably 55 mass% or more and 70 mass% or less with respect to the entire HFO refrigerant.

Fig. 4 is a system diagram illustrating the refrigeration cycle device 200 according to the present disclosure. The refrigeration cycle device 200 is an air conditioner in the illustrated example, but may be, for example, a refrigerator, a showcase, or the like. The refrigeration cycle device 200 includes the compressor 100, an outdoor heat exchanger 26 (an example of a condenser or an evaporator), an electronic expansion valve 27 for heating and an electronic expansion valve 29 for cooling (both are examples of an expansion mechanism), and an indoor heat exchanger 11 (an example of the evaporator or the condenser). The compressor 100, the outdoor heat exchanger 26, the electronic expansion valves 27, 29, and the indoor heat exchanger 11 are connected by a pipe (not illustrated), so that the refrigerant circulates in the discharge circuit 14 to form the refrigeration cycle. The refrigeration cycle is a closed circuit. A blower 25 is attached to the outdoor heat exchanger 26. A blower 10 is attached to the indoor heat exchanger 11.

The refrigeration cycle device 200 further includes an oil separator 23 provided in the discharge circuit 14 of the compressor 100, and a series circuit 12 that returns the refrigerator oil from the oil separator 23 to the compressor 100. The series circuit 12 is a circuit that returns the refrigerator oil to the oil reservoir M (Fig. 1) formed in the lower portion in the compressor 100. The refrigeration cycle device 200 further includes a four-way switching valve 24 that switches the circulation direction of the refrigerant, a receiver 28, an accumulator 15, and the suction circuit 13.

For the refrigeration cycle device 200, for example, R454C which is the refrigerant used in Example 1 can be used. The refrigeration cycle device 200 includes the compressor 100 described above with reference to Figs. 1 to 3. Thus, the slidability of the sliding portion 9 (Fig. 1) of the compressor 100 is high, and the reliability of the refrigeration cycle device 200 can be improved.

### LIST OF REFERENCE SIGNS

- 1: Hermetic Container
- 100: Compressor
- 11: Indoor Heat Exchanger
- 200: Refrigeration Cycle Device
- 21: Fixed Scroll
- 22: Turning Scroll
- 26: Outdoor Heat Exchanger
- 4: Crankshaft
- 41: Surface
- 42: Film
- 4a: Main Shaft
- 5: Main Bearing
- 6: Turning Bearing
- 8: Compression Mechanism
- 9: Sliding Portion

## Claims

1. A compressor comprising:
a high-pressure chamber type hermetic container in which refrigerant containing hydrofluoroolefin refrigerant of 50 mass% or more and refrigerator oil are sealed; and
a compression mechanism housed in the hermetic container and having a sliding portion made of an iron-based material,
wherein the refrigerator oil includes at least one refrigerator oil of polyvinyl ether or polyol ester, and
a kinematic viscosity of the refrigerator oil at 40°C is 10 mm²/s or more and 40 mm²/s or less.

2. The compressor according to claim 1, wherein
the hydrofluoroolefin refrigerant contains at least one of R1234yf or R1234ze, and
the refrigerant contains R32 as at least part of the refrigerant other than the hydrofluoroolefin refrigerant.

3. The compressor according to claim 1, wherein
the hydrofluoroolefin refrigerant contains first refrigerant which is at least one of R1234yf or R1234ze, and second refrigerant which is at least one of R1132(E) or R1123, and
the first refrigerant is contained at a ratio of 50 mass% or more and the second refrigerant is contained at a ratio of less than 50 mass% in the entire hydrofluoroolefin refrigerant.

4. The compressor according to claim 1, wherein
the iron-based material is carbon steel or chromium molybdenum steel.

5. The compressor according to claim 1, wherein
a film containing fluorine derived from the hydrofluoroolefin refrigerant is formed on a surface of a member made of the iron-based material in the sliding portion.

6. A refrigeration cycle device comprising:
a compressor;
a condenser;
an expansion mechanism; and
an evaporator,
wherein the compressor includes a high-pressure chamber type hermetic container in which refrigerant containing hydrofluoroolefin refrigerant of 50 mass% or more and refrigerator oil are sealed, and a compression mechanism housed in the hermetic container and having a sliding portion made of an iron-based material,
the refrigerator oil includes at least one refrigerator oil of polyvinyl ether or polyol ester, and
a kinematic viscosity of the refrigerator oil at 40°C is 10 mm²/s or more and 40 mm²/s or less.

## Amended claims

### Amended claims under Art. 19.1 PCT

1. (Amended) A compressor comprising:
a high-pressure chamber type hermetic container in which refrigerant containing hydrofluoroolefin refrigerant of 50 mass% or more and refrigerator oil are sealed; and
a compression mechanism housed in the hermetic container and having a sliding portion sliding on a surface made of an iron-based material,
wherein the refrigerator oil includes at least one refrigerator oil of polyvinyl ether or polyol ester, and
a kinematic viscosity of the refrigerator oil at 40°C is 10 mm²/s or more and 40 mm²/s or less.

2. The compressor according to claim 1, wherein
the hydrofluoroolefin refrigerant contains at least one of R1234yf or R1234ze, and
the refrigerant contains R32 as at least part of the refrigerant other than the hydrofluoroolefin refrigerant.

3. The compressor according to claim 1, wherein
the hydrofluoroolefin refrigerant contains first refrigerant which is at least one of R1234yf or R1234ze, and second refrigerant which is at least one of R1132(E) or R1123, and
the first refrigerant is contained at a ratio of 50 mass% or more and the second refrigerant is contained at a ratio of less than 50 mass% in the entire hydrofluoroolefin refrigerant.

4. The compressor according to claim 1, wherein
the iron-based material is carbon steel or chromium molybdenum steel.

5. (Amended) A compressor comprising:
a high-pressure chamber type hermetic container in which refrigerant containing hydrofluoroolefin refrigerant of 50 mass% or more and refrigerator oil are sealed; and
a compression mechanism housed in the hermetic container and having a sliding portion formed on a surface made of an iron-based material and sliding on a surface of a film containing fluorine derived from the hydrofluoroolefin refrigerant,
wherein the refrigerator oil includes at least one refrigerator oil of polyvinyl ether or polyol ester, and
a kinematic viscosity of the refrigerator oil at 40°C is 10 mm²/s or more and 40 mm²/s or less.

6. (Amended) A refrigeration cycle device comprising:
a compressor;
a condenser;
an expansion mechanism; and
an evaporator,
wherein the compressor includes a high-pressure chamber type hermetic container in which refrigerant containing hydrofluoroolefin refrigerant of 50 mass% or more and refrigerator oil are sealed, and a compression mechanism housed in the hermetic container and having a sliding portion sliding on a surface made of an iron-based material,
the refrigerator oil includes at least one refrigerator oil of polyvinyl ether or polyol ester, and
a kinematic viscosity of the refrigerator oil at 40°C is 10 mm²/s or more and 40 mm²/s or less.

Statement under Art. 19.1 PCT
The amendment to claim 1 is an amendment for clarifying at which portion the sliding portion slides.

The amendment to claim 5 is an amendment for making claim 5 at the time of filing of the international application independent and clarifying at which portion the sliding portion slides.

The amendment to claim 6 is an amendment for clarifying at which portion the sliding portion slides, as in the amendment to claim 1.
